# EUROPEAN PATENT APPLICATION

(11) **EP 4 675 400 A1**
(43) Date of publication of application: **07.01.2026**
(21) Application number: 24769650.3
(22) Date of filing: 18.01.2024
(51) Int. Cl.: G06F 3/01, G06F 18/214, G06N 3/04

(54) **MODEL GENERATION METHOD, MODEL ACQUISITION METHOD, VIDEO GENERATION METHOD, DEVICE, AND MEDIUM**

(30) Priority: 15.03.2023 CN 202310286640
(71) Applicant: ZTE Corporation, Shenzhen, Guangdong Province 518057 (CN)
(72) Inventor: DANG, Song, Shenzhen, Guangdong 518057 (CN); YUAN, Jinfeng, Shenzhen, Guangdong 518057 (CN)
(74) Representative: Canzler & Bergmeier Patentanwälte Partnerschaft mbB
(86) International application number: PCT/CN2024/073015
(87) International publication number: WO 2024/187954

(57) **Abstract**

The present disclosure provides a virtual character interaction model acquisition method, applied to a model management server. The acquisition method comprises: sending at least one type of data for model training to a model training server, wherein the data for model training is related to a facial expression of a predetermined character and audio data of the predetermined character, a training sample can be obtained on the basis of the data for model training, and the training sample comprises a correspondence between the facial expression of the predetermined character and the audio data; receiving a virtual character interaction model corresponding to various data for model training; and in response to a download request, sending the virtual character interaction model corresponding to the download request to a terminal corresponding to the download request. The present disclosure further provides a virtual character interaction model generation method, a video generation method, an electronic device, and a computer readable medium.

## Description

### CROSS-REFERENCE TO RELATED APPLICATIONS

This application claims priority to Chinese Patent Application No. 202310286640.2, filed on March 15, 2023, which is hereby incorporated herein by reference in its entirety.

### TECHNICAL FIELD

The present disclosure relates to the field of information technology, and specifically relates to a virtual character interaction model acquisition method, a virtual character interaction model generation method, a video generation method, an electronic device, and a computer-readable medium.

### BACKGROUND

With the development of artificial intelligence technology, voice assistants are provided on many intelligent terminals, via which human-computer interaction can be realized. Current voice assistants are confined to an auditory-only voice mode, which is monotonous and hinders further improvement in the user experience.

### SUMMARY

Embodiments of the present disclosure provide a virtual character interaction model acquisition method, a virtual character interaction model generation method, a virtual character interaction model acquisition method, a video generation method, an electronic device, and a computer-readable medium.

As a first aspect of the present disclosure, there is provided a virtual character interaction model acquisition method, which is applied to a model management server and includes: sending at least one type of data for model training to a model training server, wherein the data for model training is related to facial expressions of a predetermined character and audio data of the predetermined character, and training samples can be obtained based on the data for model training, wherein the training samples include a correspondence between the facial expressions and the audio data of the predetermined character; receiving virtual character interaction models corresponding to respective types of the data for model training; and sending, in response to a download request, a virtual character interaction model corresponding to the download request to a terminal corresponding to the download request.

As a second aspect of the present disclosure, there is provided a virtual character interaction model generation method which is applied to a model training server and includes: receiving at least one type of data for model training, wherein the data for model training is related to facial expressions of a predetermined character and audio data of the predetermined character, and training samples can be obtained based on the data for model training, wherein the training samples include a correspondence between the facial expressions and the audio data of the predetermined character; inputting each of the training samples into an initial model, and training the initial model to obtain virtual character interaction models in one-to-one correspondence with the training samples; and sending the virtual character interaction models to a model management server.

As a third aspect of the present disclosure, there is provided a virtual character interaction model acquisition method which is applied to a terminal and includes: sending a download request to a model management server; receiving a virtual character interaction model, wherein the virtual character interaction model is a model obtained by a model training server training an initial model with training samples, and the training samples include a correspondence between facial expressions and audio data of a predetermined character.

As a fourth aspect of the present disclosure, there is provided a video generation method which is applied to a terminal and includes: determining a virtual character interaction model, wherein the virtual character interaction model is a model obtained by a model training server training an initial model with training samples, and the training samples include a correspondence between facial expressions and audio data of a predetermined character; and inputting drive information to the determined virtual character interaction model to obtain an output video corresponding to the drive information, wherein a character in the output video is the predetermined character.

As a fifth aspect of the present disclosure, there is provided an electronic device, including: one or more processors; and a memory having one or more programs stored thereon which, when executed by the one or more processors, cause the one or more processors to implement at least one of: the acquisition method in the first aspect; the generation method in the second aspect; the acquisition method in the third aspect; or the video generation method in the fourth aspect.

As a sixth aspect of the present disclosure, there is provided a computer-readable medium storing a computer program thereon which, when executed by a processor, causes at least one of: the acquisition method in the first aspect; the generation method in the second aspect; the acquisition method in the third aspect; or the video generation method in the fourth aspect to be implemented.

The acquisition method may be performed by a model management server. The model management server sends training samples to a model training server, where the model training server trains an initial model with training samples to obtain virtual character interaction models. The current model management server may receive and locally store the virtual character interaction models, and, upon receiving a download request from a terminal, send a corresponding virtual character interaction model to the corresponding terminal based on the download request.

### BRIEF DESCRIPTION OF DRAWINGS

FIG. 1 is a flowchart of an implementation of an acquisition method in a first aspect of the present disclosure;
FIG. 2 is a schematic diagram of an application scenario of a method according to the present disclosure;
FIG. 3 is a flowchart of another implementation of an acquisition method in the first aspect of the present disclosure;
FIG. 4 is a flowchart of yet another implementation of an acquisition method in the first aspect of the present disclosure;
FIG. 5 is a flowchart of still another implementation of an acquisition method in the first aspect of the present disclosure;
FIG. 6 is a flowchart of still another implementation of an acquisition method in the first aspect of the present disclosure;
FIG. 7 is a flowchart of an implementation of a virtual character interaction model generation method in a second aspect of the present disclosure;
FIG. 8 is a flowchart of an implementation of a virtual character interaction model acquisition method in a third aspect of the present disclosure;
FIG. 9 is a flowchart of another implementation of a virtual character interaction model acquisition method in a third aspect of the present disclosure;
FIG. 10 is a flowchart of an implementation of a video generation method in a fourth aspect of the present disclosure;
FIG. 11 is a block diagram of an implementation of an electronic device according to the present disclosure;
FIG. 12 is a schematic diagram of a computer-readable medium according to the present disclosure;
FIG. 13 is a block diagram of an implementation of a model management server according to the present disclosure;
FIG. 14 is a block diagram of an implementation of a model training server according to the present disclosure;
FIG. 15 is a schematic diagram of an implementation of a terminal according to the present disclosure;
FIG. 16 is a flowchart of a model training method in a first embodiment of the present disclosure;
FIG. 17 is a flowchart of a model management server and a terminal interacting to complete the push of a virtual character interaction model in a second embodiment of the present disclosure;
FIG. 18 is a flowchart of model selection and download by a terminal in a third embodiment of the present disclosure;
FIG. 19 is a flowchart of model training in a fourth embodiment of the present disclosure;
FIG. 20 is a flowchart of model application settings by a terminal in a fifth embodiment of the present disclosure;
FIG. 21 is a schematic diagram of a method for using a virtual character interaction model in a scenario of "Zvoice assistant" in a sixth embodiment of the present disclosure;
FIG. 22 is a schematic diagram of a method for using a virtual character interaction model in a scenario of "specific incoming call application" in a seventh embodiment of the present disclosure; and
FIG. 23 is a schematic diagram of a method for using a virtual character interaction model in a scenario of "specific voice call" in an eighth embodiment of the present disclosure.

### DETAIL DESCRIPTION OF EMBODIMENTS

To improve understanding of the technical solutions of the present disclosure for those skilled in the art, the virtual character interaction model acquisition method, the virtual character interaction model generation method, the video generation method, the electronic device, and the computer-readable medium of the present disclosure will be described below in detail in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

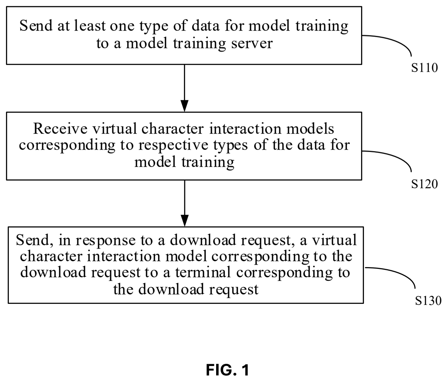

As a first aspect of the present disclosure, there is provided a virtual character interaction model acquisition method, which, as shown in FIG. 1, includes the following operations S110to S130.

At operation S110, sending at least one type of data for model training to a model training server, where the data for model training is related to facial expressions of a predetermined character and audio data of the predetermined character.

At operation S120, receiving virtual character interaction models corresponding to respective types of the data for model training.

At operation S130, sending, in response to a download request, a virtual character interaction model corresponding to the download request to a terminal corresponding to the download request.

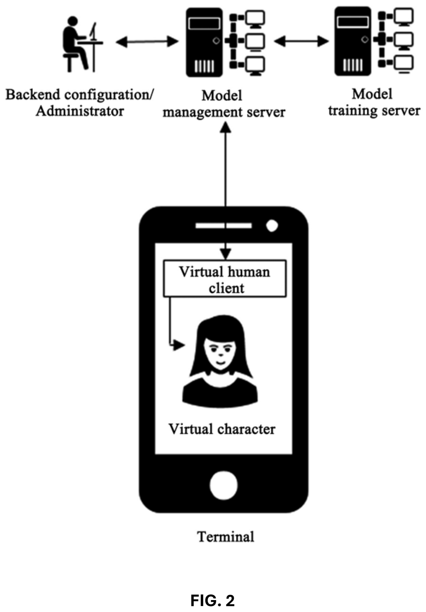

The present disclosure provides a system as shown in FIG. 2, which includes a model management server, a model training server, and a terminal.

The virtual character interaction model acquisition method in the first aspect of the present disclosure may be performed by the model management server. The model management server sends data for model training to a model training server, where the model training server trains an initial model with the data for model training to obtain virtual character interaction models. The current model management server may receive the virtual character interaction models and then locally store the virtual character interaction models; and, upon receiving a download request from a terminal, send a corresponding virtual character interaction model to the corresponding terminal based on the download request.

As described above, in the present disclosure, the data for model training is related to facial expressions (which may include mouth shapes) of a predetermined character and audio data of the predetermined character. As an optional implementation, the data for model training may include training samples including a correspondence between the facial expressions and the audio data of the predetermined character. The facial expressions include, for example, a facial expression corresponding to words that express happiness, a facial expression corresponding to words that express surprise, and a facial expression corresponding to words that express questions.

As another optional implementation, the data for model training may be video data of a predetermined character. In this case, the model training server may preprocess the data for model training first to obtain the training samples.

Since the data for training the virtual character interaction model is related to the facial expressions and the audio data of the predetermined character, the facial expressions correspond to the audio data in the video output by the virtual character interaction model. When a drive speech received at the terminal side is input into the virtual character interaction model, video information with vivid facial expressions of the character can be obtained, thereby improving the user experience.

After receiving the virtual character interaction model, the terminal may input drive information (e.g., any one of voice information, text information or video information) into the virtual character interaction model to obtain a corresponding output video. A character in the output video is the predetermined character. Therefore, through the method of the present disclosure, the human-machine interaction is not limited to voice interaction, but is upgraded to video interaction, thereby improving the user experience.

By means of the model management server and the model training server, the terminal can acquire the virtual character interaction model, which reduces the hardware requirement on the terminal device, and facilitates the popularization and application of the virtual character interaction model.

In the present disclosure, the type of data for model training sent to the model training server is not particularly limited. The same type of training samples corresponds to the same character, and different training samples correspond to different characters.

If the data for model training of one character is sent to the model training server, then the model training server can obtain a virtual character interaction model for that character; and if the data for model training of a plurality of characters are sent to the model training server, then the model training model server can obtain a plurality of virtual character interaction models in one-to-one correspondence with the plurality of characters.

When the current model management server stores a plurality of virtual character interaction models, a user of the terminal may select a corresponding virtual character based on personal preference, thereby further improving the user experience.

In the present disclosure, the "data for model training" is not particularly limited. For example, the data for model training may be video materials including facial expressions and corresponding audio data of a predetermined character. That is, the data for model training may include a final video file of the predetermined character. In the present disclosure, the "final video file" should provide enough information to satisfy the parameter requirements of the training model. For example, the duration, definition, number of voices, and the like of the final video file should meet the requirements of model training.

Optionally, the "final video file" is a video file obtained by processing an initial video file and satisfying parameter requirements for the training model. The model management server may send the final video file, including the predetermined character, to the model training server, where the model training server processes the received final video file to obtain the training samples.

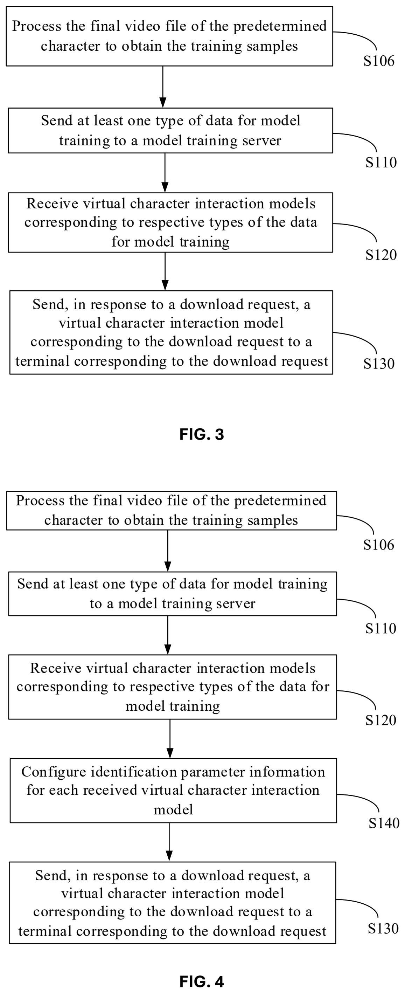

To reduce the computation volume of the model training server, optionally, the model management server directly processes the final video files of various characters to obtain training samples for each character. That is, as another optional implementation, the data for model training includes training samples. As described above, the training samples include the correspondence between the facial expressions and the audio data of the predetermined character obtained from the final video file of the predetermined character. Accordingly, as shown in FIG. 3, before sending at least one type of data for model training to the model training server (i.e., before operation S110), the acquisition method may further include: operation S106, processing the final video file of the predetermined character to obtain the training samples.

As an optional implementation, as shown in FIG. 4, the acquisition method may further include: operation S140, configuring identification parameter information for each received virtual character interaction model.

Through operation S140, the virtual character interaction models corresponding to different characters can be distinguished from each other.

In the present disclosure, the virtual character interaction model sent in operation S130 may be a virtual character interaction model configured with identification parameter information.

In the present disclosure, the identification parameter information is not particularly limited as long as the virtual character interaction models corresponding to different characters can be distinguished from each other. Optionally, the identification parameter information of the virtual character interaction model includes at least one of: a model identification, a model nickname, model introduction information, model ownership information, information indicating whether a model is open (public), cost information, application scenario information, and information indicating whether to push to a user.

### Specifically:

Model identification (ID): uniquely identifying a trained virtual character interaction model, a format of which defined in this embodiment is M-XXXXXXX.

Model nickname: a name of the model, which may be a name of a virtual character, and is used for convenient communication and easy memory.

Model introduction: introduction and explanation of a virtual character interaction model, providing model information for an administrator before deployment or for a user before download, which may be an animation, a video, a picture, texts or a combination thereof.

Model ownership information: uniquely identifying a model copyright owner, where apart from the background administrator, only the model copyright owner can modify or delete models on the server, a format of which defined in this embodiment is O-XXXXXXX.

Information indicating whether a model is open: defining whether the model is open (public) and available to all users, with options of: yes/partially open/no. When yes is selected, it indicates that the model is open to all users. When partially open is selected, it is necessary to further specify to which users it is open. When no is selected, it indicates that the model is only for use of the owner, which typically concerns a private model trained by an individual user.

Cost information: configurable information regarding whether and how much download of the model is charged. If it is free, the fee is set to 0.

Application scenario information: configurable information regarding specific applications or scenarios in which the model can be applied. If the model is specific to a certain application, application ID information should be further specified. If the model is specific to some special scenarios, for example, is started for a certain caller number, then number information should be further specified.

Information indicating whether to push to a user: configurable information regarding whether to push the model to a user actively by the server. When the model is to be pushed to a user, the server sends a message to the user actively, and pushes the model. When the model is not to be pushed to a user, the server does not actively push the model to any user.

Four virtual character interaction models configured with identification parameter information are exemplarily shown in table 1:

**Table 1**

| ID | Nickname | Introduction | Ownership ID | Open or not | Fee (RMB) | Scenario | Push or not |
|---|---|---|---|---|---|---|---|
| M-000001 | Xiaojia | Vivid reproduction of super sweet Douyin influencer Jiajia | O-000001 (representing Z company) | Yes | 0 | Specific application: Z voice assistant (com.z.assista nt) | Yes |
| M-000002 | Xiaomei | Vivid reproduction of the heroine in Korean TV play Endless Love | O-000001 (representing Z company) | Yes | 5 | Universal | No |
| M-000003 | Nezha | Hero in Chinese animation Nezha | O-000002 (representing G company) | Partially open (user ID: A, B) | 0 | Specific scenario: (Caller number: 10695555) | Yes |
| M-000004 | Piggy | Customized | O-000003 (representing user A) | No | 0 | Universal | Yes |

The first model in table 1, with an ID M-000001 and a nickname Xiaojia, is a popular Douyin (a short video social software) female live-streamer whose portrait right has been granted, the model-making company, or copyright owner, is Z company, and a unique ownership ID assigned by the system is O-000001, which indicates that only Z company has access to modify or delete this model apart from a backend administrator. The model is selected to be open to everyone, which means that the model can be downloaded by all users who have registered with the system and not downloaded and installed the model. The model fee is set to 0, representing that a user can download and use the model for free. The model scenario is defined for Z voice assistant only, so the model is only applicable to Z voice assistant after being downloaded. Push or not is set to yes, so the system will actively push the model to qualified users.

The second model in table 1, with an ID M-000002 and a nickname Xiaomei, is a heroin in a TV play whose portrait right has been granted, the model-making company, or copyright owner, is Z company, and a unique ownership ID assigned by the system is O-000001, which indicates that only Z company has access to modify or delete this model apart from a backend administrator. The model is selected to be open to everyone, which means that the model can be downloaded by all users who have registered with the system and not downloaded and installed the model. The model fee is set to 5, representing that 5 dollars is required to download the model. The model scenario is defined to be universal, so the downloaded model may be applied to a use scenario defined by a user. Push or not is set to no, so the system does not actively push the model to any user.

The third model in table 1, with an ID M-000003 and a nickname Nezha, is a hero in an animation whose portrait right has been granted, the model-making company, or copyright owner, is G company, and a unique ownership ID assigned by the system is O-000002, which indicates that only G company has access to modify or delete this model apart from a backend administrator. The model is selected to be partially open, and is specified to be open to users with IDs A and B, so the model is only available to users who log in with ID A or B. The model fee is set to 0, representing that a user can download and use the model for free. The model scenario is defined as a specific scenario, and is specified only for a caller number 10695555, so that after being downloaded, the model is activated for use only when the caller number is 10695555. Push or not is set to yes, so the system will actively push the model to qualified users.

For the fourth model in table 1, with an ID M-000004 and a nickname Piggy, the model introduction is customized, the model-maker, or copyright owner, is user A, and a unique ownership ID assigned by the system is O-000003, which indicates that only user A has access to modify or delete this model apart from a backend administrator. The model is selected to be not open, so it is only available to user A. The model fee is set to 0, representing that a user can download and use the model for free. The model scenario is defined to be universal, so the downloaded model may be applied to a use scenario defined by a user. Push or not is set to yes, so the system will actively push the model to user A. Here, only user A is qualified for push.

As described above, in the present disclosure, after the virtual character interaction model issued by the model training server is received, the virtual character interaction model may be downloaded by a terminal.

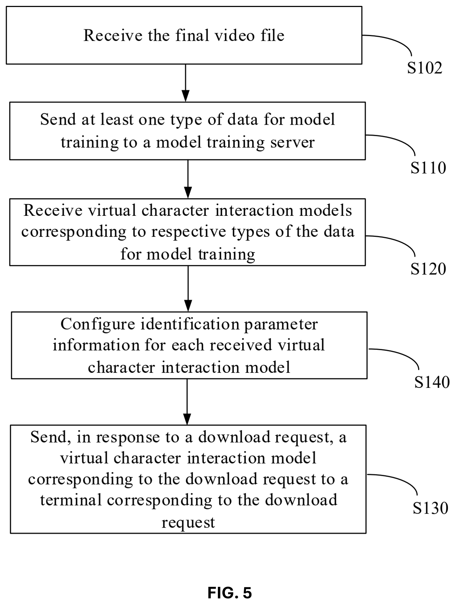

In the present disclosure, how to obtain the initial video file is not particularly limited. The initial video file may be directly uploaded to the model management server by a user or an administrator, or may be uploaded to the model management server by the user through a terminal. Accordingly, as shown in FIG. 5, before operation S110, the acquisition method may include: operation S102, receiving the final video file.

In the present disclosure, the source of the "final video file" is not particularly limited.

As an optional implementation, a final video file sent from a terminal device may be received. This solution is equivalent to "character customization". In other words, to obtain a virtual character interaction model for a certain character, the user may send a final video file of the character to the model management server from the terminal device.

In this implementation, the terminal is allowed to upload an initial video file, so that the customization of the virtual character interaction model can be realized, and the user experience can be further improved.

Apparently, the present disclosure is not limited thereto, and as another optional implementation, an administrator of the model management server may directly upload a video file of a predetermined character to the model management server, where the model management server processes the video file to obtain the data for model training.

In the acquisition method of the present disclosure, the current model management server allows only a terminal registered on the current model management server to download. Therefore, after the initial video file sent by the terminal is received, authentication of the terminal is required, and operation S106 is further performed only when the terminal passes the authentication. That is, as an optional implementation, between operations S102 and S106, the acquisition method may further include: authenticating the terminal.

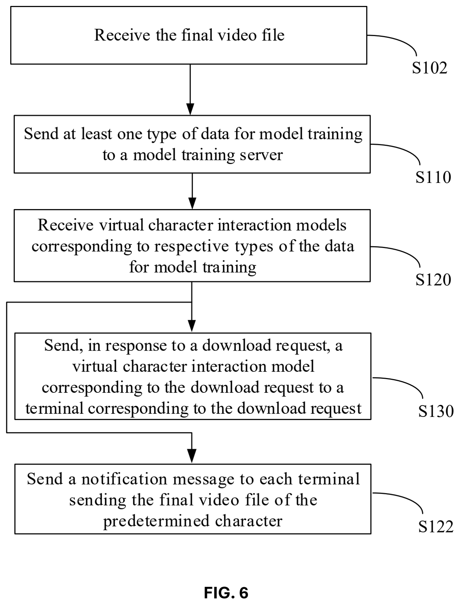

To help the terminal know the timing for downloading the virtual character interaction model, optionally, as shown in FIG. 6, after receiving the virtual character interaction models corresponding to the training samples, the acquisition method may further include: operation S122, sending a notification message to each terminal that has sent the final video file of the predetermined character.

After receiving the corresponding notification message, the terminal may send a download request to the model management server.

In the present disclosure, the model management server may establish a mapping relationship between model names and identification information of terminals. When sending a download request, a terminal carries its identification information. After receiving the download request from the terminal, the model management server analyzes the download request and determines the identification information of the terminal, and then determines and sends a corresponding virtual character interaction model to the terminal.

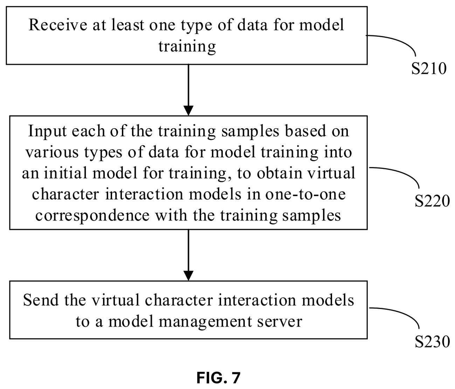

As a second aspect of the present disclosure, there is provided a virtual character interaction model generation method, which, as shown in FIG. 7, includes the following operations S210 to S230.

At operation S210, receiving at least one type of data for model training. The data for model training is related to facial expressions of a predetermined character and audio data of the predetermined character.

At operation S220, inputting each of the training samples based on various types of data for model training into an initial model, and training the initial model to obtain virtual character interaction models in one-to-one correspondence with the training samples. The training samples include a correspondence between facial expressions and audio data of a predetermined character obtained from a final video file of the predetermined character.

At operation S230, sending the virtual character interaction models to a model management server.

The generation method may be performed by a model training server. A model management server sends data for model training to a model training server, where the model training server trains an initial model with training samples based on the data for model training to obtain virtual character interaction models. The current model management server may receive and locally store the virtual character interaction models, and, upon receiving a download request from a terminal, send a corresponding virtual character interaction model to the corresponding terminal based on the download request.

As described above, in the present disclosure, the training samples include a correspondence between facial expressions and audio data of a predetermined character. The facial expressions include, for example, a facial expression corresponding to words that express happiness, a facial expression corresponding to words that express surprise, and a facial expression corresponding to words that express questions. Therefore, when a drive speech received at the terminal side is input into the virtual character interaction model, video information with vivid facial expressions of the character can be obtained, thereby improving the user experience.

After receiving the virtual character interaction model, the terminal may input drive information (e.g., voice information or text information) into the virtual character interaction model to obtain a corresponding output video. A character in the output video is the predetermined character. Therefore, through the method of the present disclosure, the human-machine interaction is not limited to voice interaction, but upgraded to video interaction, thereby improving the user experience.

By means of the model management server and the model training server, the terminal can acquire the virtual character interaction model, which reduces the hardware load of the terminal device during operation while reducing the hardware requirement on the terminal device, thereby facilitating the popularization and application of the virtual character interaction model.

In the present disclosure, how to train the initial model with the training samples is not particularly limited. For example, the virtual character interaction model may be obtained by audio driven neural radiance fields (AD-NeRF).

By means of AD-NeRF, a voice segment of the character in the final video file may last only 3min to 5min. When a new voice material is given, the virtual character interaction model may be driven to output a video matched with the character.

In the present disclosure, the tone of the character output from the virtual character interaction model is not particularly limited. For example, the tone of the character output from the virtual character interaction model may be similar to a tone in the final video file, or other computer-synthesized sounds may be used as the sound of the virtual character, or other sampled sounds may be used as the sound of the virtual character.

As described above, the data for model training may be the "final video file" or the "training samples". When the data for model training is used as training samples, the model training server does not need to perform the operation of "preprocessing the final video file to obtain the training samples".

If the data for model training is a final video file of the predetermined character, the generation method may further include, between operations S210 and S220: processing the final video file to obtain corresponding training samples.

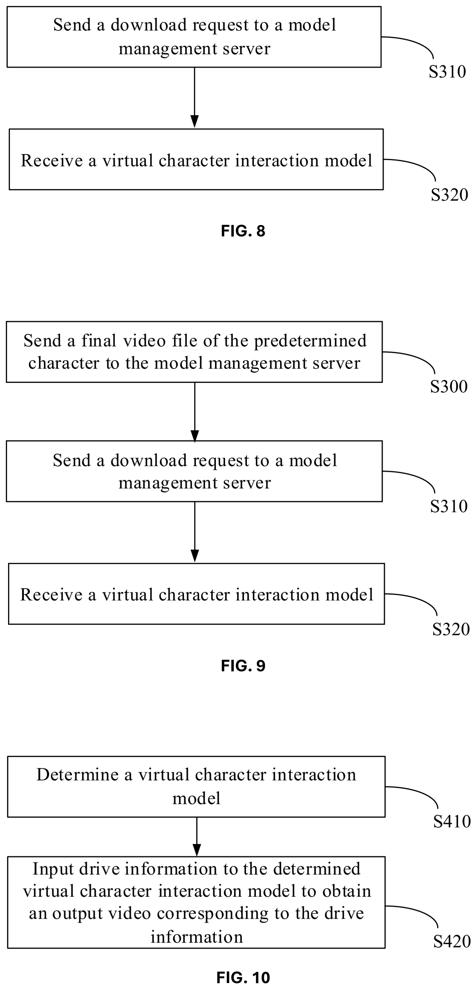

As a third aspect of the present disclosure, there is provided a virtual character interaction model acquisition method, which, as shown in FIG. 8, includes the following operations S310 to S320.

At operation S310, sending a download request to a model management server.

At operation S320, receiving a virtual character interaction model.

The virtual character interaction model is a model obtained by a model training server training an initial model with training samples, and the training samples include a correspondence between facial expressions and audio data of a predetermined character.

The acquisition method may be performed by a terminal (terminal device). The virtual character interaction model is trained by the model training server and sent to the model management server.

The model management server sends data for model training to the model training server, where the model training server trains an initial model with training samples based on the data for model training to obtain virtual character interaction models. The current model management server may receive and locally store the virtual character interaction models. The terminal sends a download request to the model management server, and the model management server, after receiving the download request from the terminal, sends a corresponding virtual character interaction model to the corresponding terminal based on the download request.

In the present disclosure, the training samples include a correspondence between facial expressions and audio data of a predetermined character. The facial expressions include, for example, a facial expression corresponding to words that express happiness, a facial expression corresponding to words that express surprise, and a facial expression corresponding to words that express questions. Therefore, when a drive speech received at the terminal side is input into the virtual character interaction model, video information with vivid facial expressions of the character can be obtained, thereby improving the user experience.

After receiving the virtual character interaction model, the terminal may input drive information (e.g., voice information or text information) into the virtual character interaction model to obtain a corresponding output video. A character in the output video is the predetermined character. Therefore, through the method of the present disclosure, the human-machine interaction is not limited to voice interaction, but upgraded to video interaction, thereby improving the user experience.

By means of the model management server and the model training server, the terminal can acquire the virtual character interaction model, which reduces the hardware load of the terminal device during operation while reducing the hardware requirement on the terminal device, thereby facilitating the popularization and application of the virtual character interaction model.

In the present disclosure, before sending the download request to the model management server, as shown in FIG. 9, the acquisition method may further include: operation S300, sending a final video file of the predetermined character to the model management server.

Through operation S300, character customization can be realized, and the user experience can be improved.

To further improve the user experience, different virtual interaction models may be used for different application scenarios. Therefore, in operation S310, a plurality of download requests may be sent to the model management server, with different download requests corresponding to different characters. Accordingly, in operation 320, a plurality of virtual character interaction models may be received.

Apparently, the present disclosure is not limited thereto. Operation S310 may be performed multiple times, where download requests issued at different times may correspond to different characters, respectively. In this way, after multiple times of downloads, the current terminal stores different virtual interaction models for a plurality of characters. The virtual character interaction models of different characters may correspond to different application scenarios. The user may select a suitable virtual character interaction model based on the application scenario.

As an optional implementation, in the virtual character interaction model, scenario parameters configured by the model training server can be set.

As another optional implementation, instead of configuring or setting the scenario configuration on the virtual character interaction model by the model training server, a user may perform scenario parameter configuration of the virtual character interaction model via a terminal device.

As an optional implementation, a correspondence among virtual character names, model identifications (e.g., model IDs, model nicknames), and model storage addresses may be established.

Different virtual character interaction models may be started in different scenarios, thereby further improving the user experience.

As a fourth aspect of the present disclosure, there is provided a video generation method which, as shown in FIG. 10, includes the following operations S410 and S420.

At operation S410, determining a virtual character interaction model. The virtual character interaction model is a model obtained by a model training server training an initial model with training samples, and the training samples include a correspondence between facial expressions and audio data of a predetermined character.

At operation S420, inputting drive information to the determined virtual character interaction model to obtain an output video corresponding to the drive information, wherein the character in the output video is the predetermined character.

The above video generation method may be performed by a terminal. The virtual character interaction model is a model obtained by a model training server training an initial model with training samples. The training samples include a correspondence between facial expressions and audio data of a predetermined character obtained from a final video file of the predetermined character, and a character in the output video is the predetermined character.

Drive information may be input into the virtual character interaction model to obtain a final video file corresponding to the drive information, so that video interaction with a terminal can be implemented, and the user experience is improved.

In the present disclosure, the virtual character interaction model is obtained by the acquisition method in the third aspect of the present disclosure, and therefore, neither the processing of the initial video nor the training of the model is performed locally at the terminal, which reduces the working pressure of the terminal hardware and improves the interaction efficiency.

As described above, the terminal may locally store a plurality of virtual character interaction models matched with a plurality of different application scenarios. In operation S410, the determined virtual character interaction model is matched with a target application scenario.

In the present disclosure, different application scenarios correspond to different types of drive information. For example, in the application scenario of "voice assistant", the corresponding drive information is specific drive audio. For example, for SIRI, the drive information is a piece of audio "hey SIRI". Upon receiving the drive audio, the voice assistant application may input the drive audio into the corresponding virtual character interaction model to obtain the final video file.

For another example, if the drive information is "incoming call sound", incoming call information may be received through an incoming call application to trigger a corresponding virtual character interaction model. At this time, the audio output from a character in the final video file is the sound of the caller. In such an application scenario, a video call at the terminal side can be implemented simply by transmitting the audio information through a channel, which reduces the occupation of bandwidth in the call process, and improves the user experience.

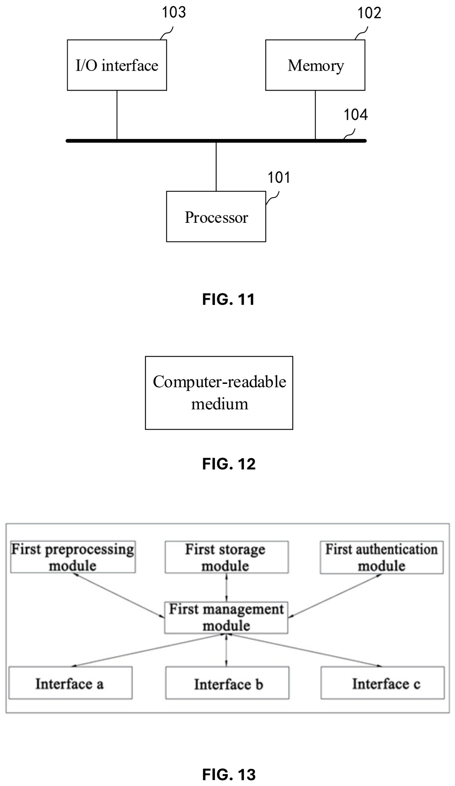

As a fifth aspect of the present disclosure, there is provided an electronic device which, as shown in FIG. 11, includes: one or more processors 101; and a memory 102 having one or more programs stored thereon which, when executed by the one or more processors 101, cause the one or more processors to implement at least one of:
the acquisition method in the first aspect of the present disclosure;
the generation method in the second aspect of the present disclosure;
the acquisition method in the third aspect of the present disclosure; or
the video generation method in the fourth aspect of the present disclosure.

Optionally, the electronic device may further include one or more I/O interfaces 103 connected between the processor and the memory and configured to enable information interaction between the processor and the memory.

The processor 101 is a device with a data processing capability, including but not limited to, a central processing unit (CPU), or the like; The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a data bus or the like.

In some embodiments, the processor 101, the memory 102, and the I/O interface 103 are interconnected via a bus 104, and further connected to other components of a computing device.

Accordingly, the electronic device may be the model management server, the model training server or the terminal introduced above.

As a sixth aspect of the present disclosure, as shown in FIG. 12, there is provided a computer-readable medium storing a computer program thereon which, when executed by a processor, causes at least one of:
the acquisition method in the first aspect of the present disclosure;
the generation method in the second aspect of the present disclosure;
the acquisition method in the third aspect of the present disclosure; or
the video generation method in the fourth aspect of the present disclosure to be implemented.

As a seventh aspect of the present disclosure, there is provided a system for a virtual character interaction model. As shown in FIG. 2, the system includes a model management server, a model training server, and a terminal. The model management server is configured to perform the acquisition method in the first aspect of the present disclosure, the model training server is configured to perform the generation method in the second aspect of the present disclosure, and the terminal is configured to perform the acquisition method in the third aspect of the present disclosure, and/or the video generation method in the fourth aspect of the present disclosure.

### Embodiments

This embodiment provides a model management server which, as shown in FIG. 13, may include a first management module, a preprocessing module, a storage module, a first authentication module, an interface a, an interface b, and an interface c.

The first management module is a core module of the model management server, which is configured for service logic judgment and processing, and scheduling and management of other modules.

The interface a is a background management interface of the model management server, which is configured to provide services such as configuration and management of the model management server, background training material transmission, service subscription management, and the like.

The interface b is an interface between a terminal and the model management server, which is configured for communication between the terminal and the model management server, uploading model training materials, and downloading a trained virtual character interaction model.

The interface c is an interface between servers, and provides training materials and model transmission services.

The preprocessing module is configured to preprocess training materials and generate materials for training from a video file.

The storage module is configured to store information such as original training materials, preprocessed training materials and trained models.

The authentication module is configured to perform bidirectional identity authentication on other communication network elements.

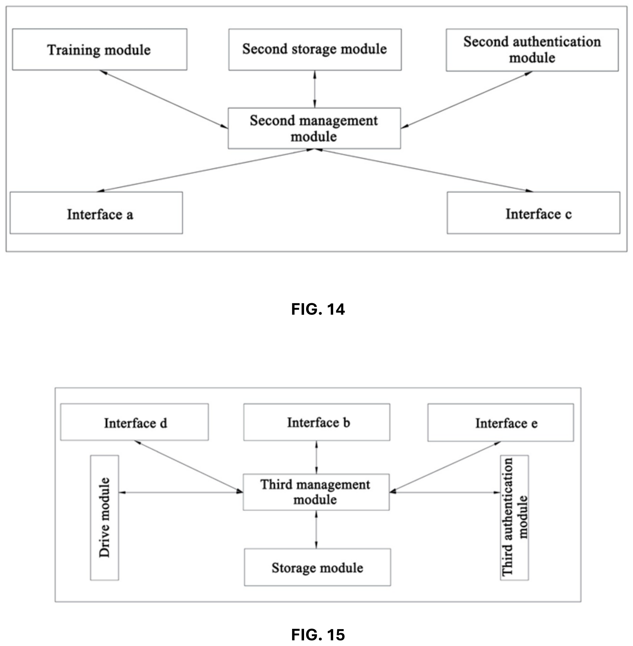

The present disclosure further provides a model training server which, as shown in FIG. 14, may include a second management module, a training module, a second storage module, a second authentication module, an interface a, and an interface c.

The second management module is a service logic processing core module of the model training server, which is configured for service logic judgment and processing, and scheduling and management of other modules.

The training module is configured to train an initial model according to the imported training samples to obtain a virtual character interaction model. To ensure the training performance, the training module may optionally be a specialized GPU cluster card, or an NPU card.

The second storage module is configured to store training samples and trained virtual character interaction models.

The second authentication module is configured to perform bidirectional identity authentication on other communication network elements.

The interface a is a background management interface and provides configuration and management of a model training model.

The interface c is an interface between servers, and provides training samples and model transmission services.

The present disclosure further provides a terminal which, as shown in FIG. 15, includes a third management module, a third storage module, a drive module, a third authentication module, an interface b, an interface d, and an interface e.

The interface b is an interface between a terminal and the model management server, which is configured for communication between the terminal and the model management server, uploading model training materials, and downloading a trained virtual character interaction model.

The interface d is a user interface configured to provide a user interface, and provide functions of viewing, setting and importing local customized training materials of a virtual character interaction model.

The interface e is an application interface configured to import model ID information and drive audio information from other applications or services.

The third management module is a service logic processing core module of the terminal, which is configured for service logic judgment and processing, and for scheduling and management of other modules.

The drive module is configured to synthesize a virtual human video in real time based on the model information and the drive audio information transmitted from the third management module, so that a display panel of the terminal can show the virtual human video to a user, thereby completing the interaction with the user. To guarantee the effect of real-time conversion, the drive module is configured with a specialized hardware accelerator (e.g., high-performance GPU+NPU) to ensure latency within 20ms.

The third storage module is configured to store a local initial video and a downloaded virtual character interaction model.

The third authentication module is configured to perform bidirectional identity authentication on other communication network elements.

### First Embodiment

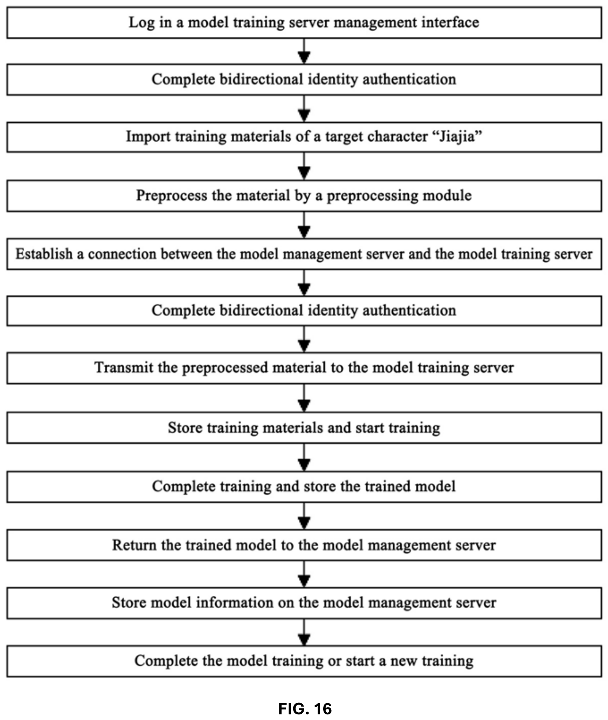

As shown in FIG. 16, this first embodiment provides a process in which the model management server interacts with the model training server to obtain a virtual character interaction model.

An administrator logs into the model training server (interface a), which may be a separate client or browser here, via a backend management program.

After receiving a connection request transmitted via the interface a, the model management server management module invokes the first authentication module to perform bidirectional identity authentication. If the authentication is passed, a next operation is performed; otherwise, the process is ended.

When the authentication is passed, the administrator imports training materials of a target character into the model management server (interface a) through a background interface, where the target character is named Jiajia, a movie star whose portrait right has been granted.

After receiving the training materials transmitted via the interface a, the first management module of the model management server invokes the preprocessing module to preprocess the materials.

Upon receiving a notification indicating that the processing by the preprocessing module is completed, the first management module of the model management server initiates a connection with the model training server via the interface c.

The model management server invokes the first authentication module, and the model training server invokes the second authentication module, to complete the identity authentication of the two parties.

The model management server transmits the training materials to the model training server via the interface c.

The second management module of the model training server invokes the storage module to store the materials, and invokes the training module to start training.

Upon receiving a notification indicating that the training is completed, the second management module of the model training server invokes the second storage module to store the model.

The second management module of the model training server returns the trained model to the model management server via the interface c.

After receiving the model information transmitted via the interface c, the first management module of the model management server invokes the first storage module to store the model.

The first management module of the model management server informs a background administrator that the model is trained via the interface a. The administrator confirms that the training is completed, or initiates a new model training.

### Second Embodiment

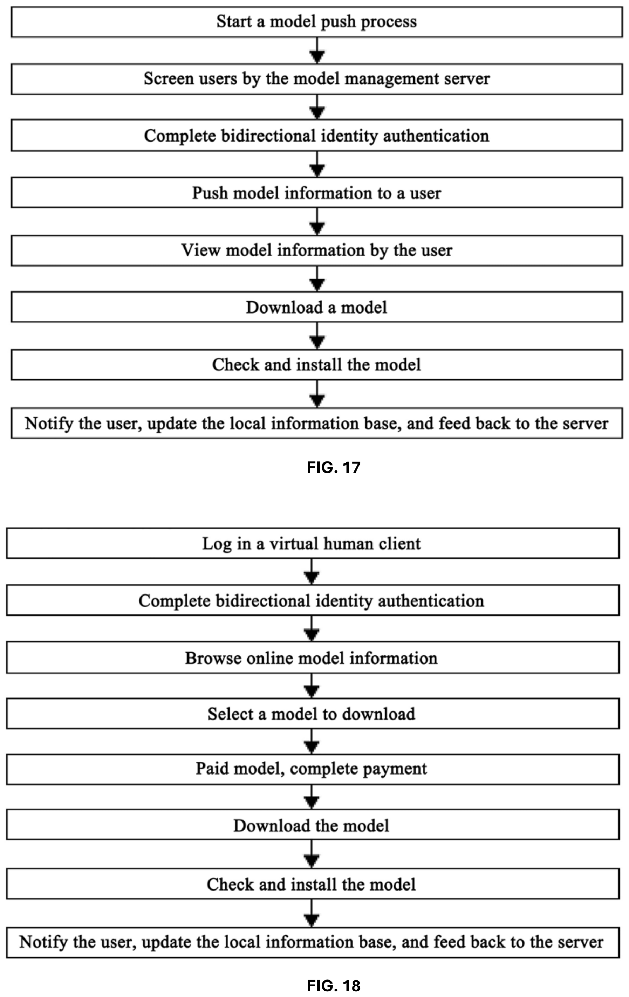

As shown in FIG. 17, this second embodiment provides an interactive process between the model management server and the terminal.

Upon detecting that the model "M-000001" is ready, and the parameter "push or not" is yes, the first management module of the model management server starts a push process of a new virtual character interaction model.

The first management module screens users meeting conditions, and selects and sends push messages to users who have not installed the virtual character interaction model from online users registered with this model management server.

It should be noted here that the push frequency and interval may be further set at the server side, for example, the push is performed 3 times every other day. In this embodiment, it is set to push only once. Namely, the model management server starts a model push process only once after the virtual character interaction model is created for the first time.

Communication between the model management server and a virtual character client of the terminal is established via the interface b, and the two invoke their respective authentication modules to complete bidirectional identity authentication.

When the authentication is passed, the model management server issues model information of the virtual character interaction model to the terminal.

After parsing the information of the virtual character interaction model, the terminal displays the information to the user via the interface d of the terminal, where the user can view the information of the virtual character interaction model.

After the user checks the information, if the user is satisfied with the information of the virtual character interaction model, the terminal, after obtaining permission from the user, sends a download request to the model management server to start download of the model. Otherwise, the process is ended.

After the virtual character interaction model is downloaded, the third management module of the terminal checks integrity of the model information of the virtual character interaction model. If the checking is passed, the model is installed and configured according to model configuration parameters (table 1).

When the installation is completed, the user is informed of an installation result, and a local model configuration information base is updated. Meanwhile, the installation result is fed back to the server.

The updated local model configuration information base is shown in table 2:

**Table 2**

| ID | Nickname | Introduction | Ownership ID | Application scenario setting | Model storage path |
|---|---|---|---|---|---|
| M-000001 | Xiaojia | Vivid reproduction of super sweet Douyin influencer Jia | O-000001 (representing Z company) | Z voice assistant (com.z.assistant) | data/data/com.virtu alperson/model/M-000001 |

### Third Embodiment

As shown in FIG. 18, this third embodiment gives a process of selecting and downloading a virtual character interaction model by a terminal.

A user A inputs his/her account and password to an intelligent terminal and logs in a virtual human client.

Communication between the model management server and a virtual character client of the terminal is established via the interface b, and the two invoke their respective authentication modules to complete bidirectional identity authentication.

The user A browses model information available for download via the interface d. Here, M-000002 and M-000003 are available for download. Note: M-000001 has been previously downloaded, and thus is not shown in a browse window of new models not downloaded.

The user selects a desired model to download through the terminal. Here, the user selects M-000002.

Since it is a paid model, the interface will jump to a payment interface to allow the user to complete the payment. Here, 5 dollar needs to be paid. If no payment is needed, this operation is skipped.

The download process is started when the payment is completed.

After the virtual character interaction model is downloaded, the third management module of the terminal checks integrity of the model information of the virtual character interaction model. If the checking is passed, the model is installed and configured according to model configuration parameters (table 1).

It is noted that since the model application scenario is universal here, the terminal may further guide the user to set an application scenario, where the user may set the application scenario according to a guidance interface, or may select to set the application scenario later. The detailed procedure is the same as that in the sixth embodiment below. In this embodiment, the user selects to set later.

When the installation is completed, the user is informed of an installation result, and a local model configuration information base is updated. Meanwhile, the installation result is fed back to the server.

M-000003 is further downloaded by the user by repeating the above operations.

The updated local model configuration information base is shown in table 3:

**Table 3**

| ID | Nickname | Introduction | Ownership ID | Application scenario setting | Model storage path |
|---|---|---|---|---|---|
| M-000001 | Xiaojia | Vivid reproduction of super sweet Douyin influencer Jia | O-000001 (representing Z company) | Z voice assistant (com.z.assista nt) | data/data/com.virtualperson /model/M-000001 |
| M-000002 | Xiaomei | Vivid reproduction of the heroine in Korean TV play "Endless Love" | O-000001 (representing Z company) | to be set | data/data/com.virtualperson /model/M-000002 |
| M-000003 | Nezha | Hero in Chinese animation "Nezha" | O-000002 (representing G company) | 10695555 calling | data/data/com.virtualperson /model/M-000003 |

### Fourth Embodiment

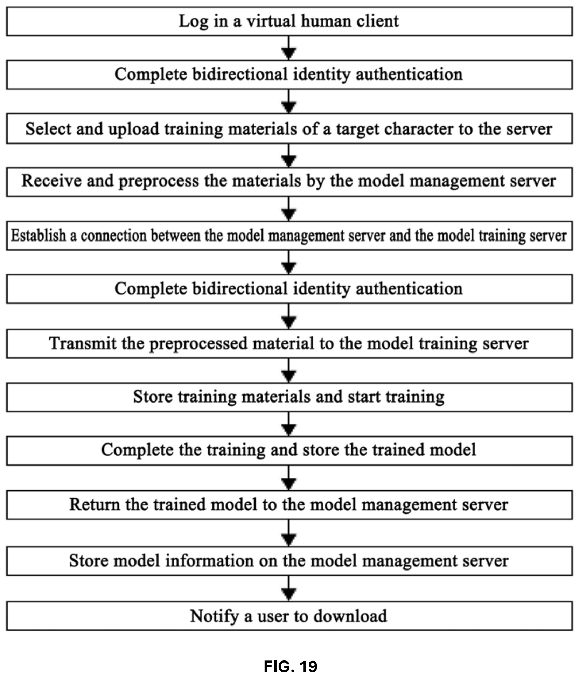

As shown in FIG. 19, the fourth embodiment shows a process of model training performed by the model training server.

A user logs in a virtual human client on the terminal.

After receiving a connection request transmitted via the interface b, the first management module of the model management server invokes the first authentication module to perform bidirectional identity authentication. If the authentication is passed, a next operation is performed; otherwise, the process is ended.

When the authentication is passed, the user imports, via the interface d, training materials of a target character, here a piggy, which is a target character training video (i.e., final character video) collected by the user. The third management module of the terminal invokes the interface b to upload the training materials to the model management server.

It is noted that while the model material is imported, model attribute parameters should be further specified, and configurable parameters here mainly include: model nickname, model introduction, open or not, cost, application scenario, and push or not. Other attribute parameters may be automatically assigned by the server.

After receiving the training materials transmitted via the interface b, the first management module of the model management server invokes the preprocessing module to preprocess the materials.

Upon receiving a notification indicating that the processing by the preprocessing module is completed, the first management module of the model management server initiates connection with the model training server via the interface c.

The model management server and the model training server invokes their respective authentication modules to complete bidirectional identity authentication.

The model management server transmits the training materials to the model training server via the interface c.

The second management module of the model training server invokes the storage module to store the materials, and invokes the training module to start training.

Upon receiving a notification indicating that the training is completed, the second management module of the model training server invokes the second storage module to store the model.

The model training server management module returns the trained virtual character interaction model to the model management server via the interface c.

After receiving the model information transmitted via the interface c, the model management server management module invokes the first storage module to store the model.

The model management server management module informs, via the interface b, the terminal that the virtual character interaction model is completely trained and ready for download.

It is noted that in this embodiment, training and downloading of the model are free for the user. In practical service deployment, another alternative is to charge for model training or download. The specific rates may be set by a service provider, and are not described in detail here.

When the model download and installation are completed, the local model configuration base may be further refreshed to table 4 below:

**Table 4**

| ID | Nickname | Introduction | Ownership ID | Application scenario setting | Model storage path |
|---|---|---|---|---|---|
| M-000001 | Xiaojia | Vivid reproduction of super sweet Douyin influencer Jiajia | O-000001 (representing Z company) | Z voice assistant (com.z.assistant) | data/data/com.virtualpers on/model/M-000001 |
| M-000002 | Xiaomei | Vivid reproduction of the heroine in Korean TV play Endless Love | O-000001 (representing Z company) | to be set | data/data/com.virtualpers on/model/M-000002 |
| M-000003 | Nezha | Hero in Chinese animation Nezha | O-000002 (representing G company) | 10695555 calling | data/data/com.virtualpers on/model/M-000003 |
| M-000004 | Piggy | Customized | O-000003 (representing user A) | to be set | data/data/com.virtualpers on/model/M-000004 |

### Fifth Embodiment

From table 4 in the above embodiment, it can be seen that two virtual character interaction models are not ready for use since the application scenarios thereof are not set. This embodiment explains how to set an application scenario.

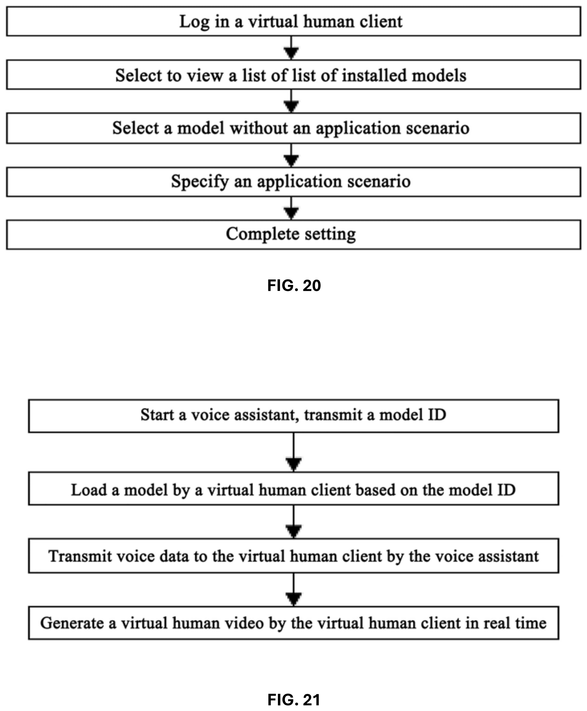

The process is shown in FIG. 20:
logging in a virtual human client;
selecting to view a list of installed models, which are M-000001, M-000002, M-000003 and M-000004 here;
selecting a model without any application scenario, which is M-000002 here (Note: use scenarios of the two models M-000001 and M-000003 are determined by the model owner, and cannot be modified by a local user);
setting the application scenario by the user, which is here set to: voice call with contact "Teacher Zhao"; and
confirming to complete the setting.

The local model configuration base is refreshed to table 5:

**Table 5**

| ID | Nickname | Introduction | Ownership ID | Application scenario setting | Model storage path |
|---|---|---|---|---|---|
| M-000001 | Xiaojia | Vivid reproduction of super sweet Douyin influencer Jiajia | O-000001 (representing Z company) | Z voice assistant (com.z.assistant) | data/data/com.virtualpers on/model/M-000001 |
| M-000002 | Xiaomei | Vivid reproduction of the heroine in Korean TV play Endless Love | O-000001 (representing Z company) | Voice call with contact "Teacher Zhao" | data/data/com.virtualpers on/model/M-000002 |
| M-000003 | Nezha | Hero in Chinese animation Nezha | O-000002 (representing G company) | 10695555 calling | data/data/com.virtualpers on/model/M-000003 |
| M-000004 | Piggy | Customized | O-000003 (representing user A) | to be set | data/data/com.virtualpers on/model/M-000004 |

### Sixth Embodiment

This embodiment introduces an application scenario of a virtual human: the voice assistant is converted into a preset virtual human image to complete interaction with a user, which gives a feel of communicating with a real person instead of a machine, thereby greatly improving the user experience. The whole flowchart is shown in FIG. 21:
starting Z voice assistant to transmit model ID information, here M-000001, to a virtual human client management module via the interface e;
reading model data by the virtual human client management module, and invoking the model drive module to load the model;
transmitting, by Z voice assistant, voice information to the virtual human client management module in real time via the interface e, and then further to the drive module; and
computing and generating, by a virtual human client drive module, a virtual human video based on a drive speech in real time, and displaying the virtual human video to a user. Due to a special hardware acceleration unit, latency of the whole computation rendering is controlled within 20ms.

Through these operations, Z voice assistant is converted into a real person Xiaojia, which gives the user a feel of communicating with Xiaojia instead of a machine, thereby greatly improving the experience of the user while using Z voice assistant.

### Seventh Embodiment:

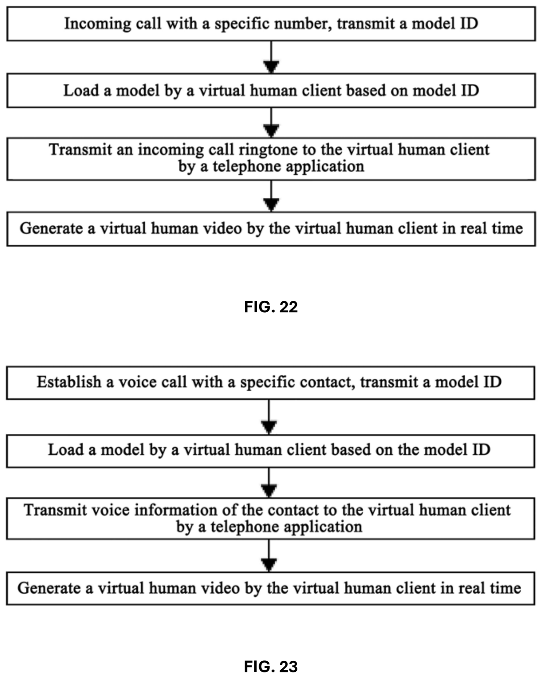

This embodiment introduces a second application scenario of a virtual human: for a specific caller number, a mobile phone incoming call ringtone or video is converted into a predetermined virtual human singing video. In other words, the ringtone is sung by the virtual human, which gives a refreshing incoming call experience to people. The whole flowchart is shown in FIG. 22:
receiving an incoming call with a specific number, which is 10695555 here, representing a business telephone from G company; transmitting, by a telephone application, preset model ID information, i.e., M-000003, to a virtual human client management module through the interface e;
reading model data by the virtual human client management module, and invoking the model drive module to load the model;
transmitting, by the telephone application contact, incoming call ringtone data to the virtual human client management module in real time via the interface e, and then further to the drive module; and
computing and generating, by a virtual human client drive module, a virtual human singing video based on a drive ringtone in real time, and displaying the virtual human video to a user. Due to a special hardware acceleration unit, latency of the whole computation rendering is controlled within 20ms.

Through these operations, the incoming call ringtone or video corresponding to an official number of G company is converted into a video of Nezha singing specially customized for G company, while the singing content is still the ringtone or video set by the user. Since Nezha represents the brand image of G company, this not only gives a refreshing incoming call experience to the user, but also promotes the popularization of the brand image of G company, thereby achieving multiple benefits.

### Eighth Embodiment:

This embodiment introduces a third application scenario of a virtual human: for a specific contact, the voice of the contact in voice calls is converted into a predetermined virtual human speaking video, so that traditional voice calls can be converted into a novel "video call" experience without consuming a large amount of traffic as the video call does. The whole flowchart is shown in FIG. 23:
establishing a voice call with a specific contact, which is Teacher Zhao here; transmitting, by a telephone application, preset model ID information, i.e., M-000002, to a virtual human client management module through the interface e;
reading model data by the virtual human client management module, and invoking the model drive module to load the model;
transmitting, by the telephone application contact, voice data of the contact to the virtual human client management module in real time via the interface e, and then further to the drive module; and
computing and generating, by a virtual human client drive module, a virtual human speaking video based on a drive speech in real time, and displaying the virtual human video to a user. Due to a special hardware acceleration unit, latency of the whole computation rendering is controlled within 20ms.

Through these operations, the voice call with Teacher Zhao is converted into a "video call" with Xiaomei. Xiaomei is an image of Teacher Zhao specially set by the user, which will bring a brand new experience to the user in conversations with Teacher Zhao. Moreover, it also avoids the high traffic consumption of traditional video calls and achieves multiple benefits.

It should be noted that although only three virtual human application scenarios are given in the embodiments of the present disclosure, the actual application scenarios are far from being limited thereto, which may also be, for example, a teleconference scenario, a ring-back tone scenario during a voice call, and the like. All of these can be implemented based on the solutions and ideas provided in the present disclosure.

Those of ordinary skill in the art will appreciate that all or some operations of the above described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A virtual character interaction model acquisition method, which is applied to a model management server and comprises:
sending at least one type of data for model training to a model training server, wherein the data for model training is related to facial expressions of a predetermined character and audio data of the predetermined character, and training samples can be obtained based on the data for model training, wherein the training samples comprise a correspondence between the facial expressions and the audio data of the predetermined character;
receiving virtual character interaction models corresponding to respective types of the data for model training; and
sending, in response to a download request, a virtual character interaction model corresponding to the download request to a terminal corresponding to the download request.

2. The acquisition method according to claim 1, wherein the data for model training comprises a final video file of the predetermined character, wherein the final video file satisfies parameter requirements of a training model.

3. The acquisition method according to claim 1, wherein the data for model training comprises training samples comprising a correspondence between the facial expressions and the audio data of the predetermined character obtained from a final video file of the predetermined character; and before sending at least one type of data for model training to the model training server, the acquisition method comprises:
processing the final video file of the predetermined character to obtain the training samples.

4. The acquisition method according to claim 2 or 3, wherein before processing the final video file of the predetermined character, the acquisition method further comprises:
receiving the final video file.

5. The acquisition method according to any one of claims 1 to 3, wherein the acquisition method further comprises:
configuring identification parameter information for each received virtual character interaction model.

6. The acquisition method according to claim 5, wherein the identification parameter information of the virtual character interaction model comprises at least one of:
a model identification, a model nickname, model introduction information, model ownership information, information indicating whether a model is open, cost information, application scenario information, and information indicating whether to push to a user.

7. A virtual character interaction model generation method, which is applied to a model training server and comprises:
receiving at least one type of data for model training, wherein the data for model training is related to facial expressions of a predetermined character and audio data of the predetermined character, and training samples are obtained from the data for model training, wherein the training samples comprise a correspondence between the facial expressions and the audio data of the predetermined character;
inputting each of the training samples into an initial model, and training the initial model to obtain virtual character interaction models in one-to-one correspondence with the training samples; and
sending the virtual character interaction models to a model management server.

8. A virtual character interaction model acquisition method, which is applied to a terminal, and comprises:
sending a download request to a model management server;
receiving a virtual character interaction model, wherein the virtual character interaction model is a model obtained by a model training server training an initial model with training samples, and the training samples comprise a correspondence between facial expressions and audio data of a predetermined character.

9. The acquisition method according to claim 8, wherein before sending the download request to the model management server, the acquisition method further comprises:
sending a final video file of the predetermined character to the model management server.

10. A video generation method, which is applied to a terminal and comprises:
determining a virtual character interaction model, wherein the virtual character interaction model is a model obtained by a model training server training an initial model with training samples, and the training samples comprise a correspondence between facial expressions and audio data of a predetermined character; and
inputting drive information to the determined virtual character interaction model to obtain an output video corresponding to the drive information, wherein a character in the output video is the predetermined character.

11. The video generation method according to claim 10, wherein in the operation of determining the virtual character interaction model, the determined virtual character interaction model is matched with a target application scenario.

12. An electronic device, comprising:
one or more processors; and
a memory having one or more programs stored thereon which, when executed by the one or more processors, cause the one or more processors to implement at least one of:
the acquisition method according to any one of claims 1 to 6;
the generation method according to claim 7;
the acquisition method according to claim 8 or 9; or
the video generation method according to claim 10 or 11.

13. A computer-readable medium storing a computer program thereon which, when executed by a processor, causes at least one of:
the acquisition method according to any one of claims 1 to 6;
the generation method according to claim 7;
the acquisition method according to claim 8 or 9; or
the video generation method according to claim 10 or 11 to be implemented.
